# EUROPEAN PATENT APPLICATION

(11) **EP 4 550 358 A1**
(43) Date of publication of application: **07.05.2025**
(21) Application number: 23891068.1
(22) Date of filing: 25.05.2023
(51) Int. Cl.: H01B 1/06, H01B 1/10, H01M 10/052, H01M 10/0562

(54) **SULFIDE-BASED SOLID ELECTROLYTE AND ALL-SOLID-STATE LITHIUM ION BATTERY**

(30) Priority: 17.11.2022 JP 2022184334
(71) Applicant: JX Advanced Metals Corporation, Tokyo 105-8417 (JP)
(72) Inventor: YAMAMOTO,Shoichi, Kitaibaraki-shi, Ibaraki 319-1535 (JP)
(74) Representative: Yeadon IP Limited
(86) International application number: PCT/JP2023/019551
(87) International publication number: WO 2024/105906

(57) **Abstract**

A sulfide-based solid electrolyte represented by the formula Li₄P₁₋ₓSiₓS₄₋ₓHaₓI (wherein Ha is one or both of Cl, Br and I, and 0.05<x≦0.3).

## Description

### FIELD OF THE INVENTION

The present invention relates to a sulfide-based solid electrolyte and all-solid-state lithium ion battery.

### BACKGROUND OF THE INVENTION

In recent years, with the rapid spread of information-related devices and communication devices such as personal computers, video cameras, and mobile phones, the development of batteries to be used as power sources for these devices has become important. Among these batteries, lithium ion batteries have attracted attention from the viewpoint of their high energy density. In addition, there is a demand for high energy density and improved battery characteristics for lithium ion secondary batteries for large-scale applications such as vehicle-mounted power sources and load leveling.

However, in the case of lithium ion batteries, the electrolyte is mostly organic compounds, and even if a flame-retardant compound is used, it cannot be said that the risk of fire is completely eliminated. As an alternative to these liquid lithium ion batteries, all-solid-state lithium ion batteries, which use a solid electrolyte, have been attracting attention in recent years. Among them, all-solid-state lithium ion batteries that use sulfides such as Li₂S-P₂S₅ as the solid electrolyte or that add lithium halides to them are becoming mainstream.

The sulfide Li₄PS₄I is a Li ion conductor that belongs to the tetragonal crystal and space group P4/nmm. It is electrochemically stable and generates little H₂S when exposed to the atmosphere, so it is expected to be a candidate for a solid electrolyte for all-solid-state batteries, which are the next generation of Li-ion batteries. In Non-Patent Document 1, the material Li₄PS₄I was discovered using a solvent-based synthesis approach, and the crystal structure of the material was clarified.

### CITATION LIST

### Non-patent literature

[Non-patent literature 1] Stefan J. Sedlmaier et al., Li4PS4I: A Li+ Superionic Conductor Synthesized by a Solvent-Based Soft Chemistry Approach, Chem. Mater. (2017), 29, 1830-1835.

### SUMMARY OF THE INVENTION

However, the Li ion conductivity of Li₄PS₄I is about 1.2 × 10⁻⁴ S/cm at room temperature, which is one to two orders of magnitude lower than other materials as a sulfide-based solid electrolyte. Therefore, further improvement in ion conductivity is desired for application to all-solid-state batteries.

The present invention has been made to solve the above-mentioned problems, and has an object to provide a sulfide-based solid electrolyte having good ion conductivity and an all-solid-state lithium ion battery using the same.

The present invention, which was completed based on the above findings, is a sulfide-based solid electrolyte represented in an embodiment by the composition formula: Li₄P₁₋ₓSiₓS₄₋ₓHaₓI
(wherein Ha is one or two of Cl, Br, and I, and 0.05<x≦0.3).

In another embodiment of the sulfide-based solid electrolyte of the present invention, in the above formula, 0.1≦x≦0.3.

In yet another embodiment, the present invention is an all-solid-state lithium ion battery comprising a solid electrolyte layer containing a sulfide-based solid electrolyte according to an embodiment of the present invention, a positive electrode layer, and a negative electrode layer.

According to the present invention, it is possible to provide a sulfide-based solid electrolyte having good ionic conductivity, and an all-solid-state lithium ion battery using the same.

### BRIEF DESCRIPTION OF THE DRAWINGS

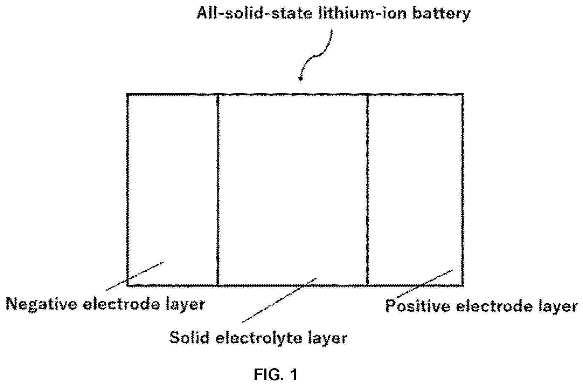

FIG. 1 is a schematic diagram of an all-solid-state lithium ion battery according to an embodiment of the present invention.

### DETAILED DESCRIPTION OF THE INVENTION

Next, the embodiments of the present invention will be described in detail with reference to the drawings. It should be understood that the present invention is not limited to the following embodiments, and that appropriate changes and improvements in the design may be made based on the ordinary knowledge of those skilled in the art without departing from the spirit of the present invention.

### (Sulfide-based solid electrolyte)

The sulfide-based solid electrolyte according to the embodiment of the present invention is represented by the composition formula: Li₄P₁₋ₓSiₓS₄₋ₓHaₓI (wherein Ha is one or two of Cl, Br, and I, and 0.05<x≦0.3). In the sulfide-based solid electrolyte according to the embodiment of the present invention, phosphorus (P) in the solid electrolyte is replaced with silicon (Si), which has a larger ionic radius, so that the crystal lattice is expanded and the ionic conductivity is improved. In addition, by replacing sulfur (S) with one or two of Cl, Br, and I, which are halogens with a large ionic radius, the stability of the crystal structure is increased and the generation of impurity phases other than the Li₄PS₄I phase is suppressed. With this configuration, substances that inhibit ion conduction are reduced, and a sulfide-based solid electrolyte with good ionic conductivity is obtained.

In the sulfide-based solid electrolyte according to the embodiment of the present invention, if x is 0.05 or less in the above composition formula, the amount of substitution is small, so the expansion effect of the crystal lattice is weak, and sufficient ion conductivity improvement effect cannot be obtained. In addition, if x is more than 0.3, there is a risk of Li₂S phase or LiI phase with low ion conductivity being generated. In the sulfide-based solid electrolyte according to the embodiment of the present invention, it is preferable that 0.1≦x≦0.3 in the above composition formula. According to such a configuration, a sulfide-based solid electrolyte having better ion conductivity can be obtained. If the ion conductivity of the sulfide-based solid electrolyte is good in this way, the voltage drop (IR drop) during discharge is small, so that the battery capacity of the all-solid-state lithium ion battery using it is high. In addition, this effect is remarkable when the all-solid-state lithium ion battery is particularly high-rate.

The average particle size of the sulfide-based solid electrolyte according to the embodiment of the present invention is not particularly limited, but may be 0.01 to 100 µm, 0.1 to 100 µm, or 0.1 to 50 µm.

The ionic conductivity of the sulfide-based solid electrolyte according to the embodiment of the present invention is preferably 0.5 mS/cm or more, more preferably 0.8 mS/cm or more, and even more preferably 1.0 mS/cm or more at 30°C. The ionic conductivity of the sulfide-based solid electrolyte can be measured, for example, by the following method.

First, 0.2 g of the sulfide-based solid electrolyte powder is pressed at a pressure of 370 MPa to form a plate, and then 0.1 g of gold powder is spread on both sides and pressed at 555 MPa to produce a pellet having gold electrodes with a diameter of 10 mm. Using the pellet, AC impedance measurement from 20 Hz to 100 MHz is performed at 30°C with an applied voltage of 100 mV using an E4990A manufactured by Toyo Corporation with open-short correction. The arcs seen in the part of the Cole-Cole plot obtained by the AC impedance measurement at frequencies of 10 kHz or more are analyzed to determine the migration resistance of Li ions. Next, the ionic conductivity is calculated from the Li ion migration resistance and the thickness and area of the solid electrolyte part of the pellet used in the measurement, based on the following formula: Ionic conductivity (mS/cm) = Thickness of solid electrolyte part of pellet (cm) x 1000 / [(Li ion migration resistance (Ω)) x (Area of solid electrolyte part of pellet (cm2))]

### (Method of manufacturing a sulfide-based solid electrolyte)

Next, a method of manufacturing a sulfide-based solid electrolyte according to an embodiment of the present invention will be described.

First, raw materials are weighed out to obtain a predetermined composition in a glove box with an inert gas atmosphere such as argon gas or nitrogen gas. Examples of the raw materials used here include Li₂S, P₂S₅, SiS₂, LiCl, LiBr, and Lil.

Next, the mixture is mixed in a mortar or the like for 5 to 30 minutes to prepare a mixed powder. At this time, it is preferable to mix for such a time that the average particle size of the mixed powder becomes 5 to 40 µm.

Next, the mixed powder is pelletized and vacuum sealed in a quartz ampoule, and the quartz ampoule is fired at 400 to 800° C. for 1 to 20 hours, thereby producing a sulfide-based solid electrolyte according to an embodiment of the present invention, which is represented by the composition formula Li₄P₁₋ₓSiₓS₄₋ₓHaₓI (wherein Ha is one or two of Cl, Br, and I, and 0.05<x≦0.3).

### (All-solid-state lithium ion battery)

A solid electrolyte layer is formed using the sulfide-based solid electrolyte according to the embodiment of the present invention, and an all-solid-state lithium ion battery including the solid electrolyte layer, a positive electrode layer, and a negative electrode layer can be produced. The positive electrode layer and the negative electrode layer constituting the all-solid-state lithium ion battery according to the embodiment of the present invention are not particularly limited and can be formed of known materials and can have a known configuration as shown in FIG. 1.

The positive electrode layer of the lithium ion battery is a layer of a positive electrode mixture obtained by mixing a known positive electrode active material for lithium ion batteries with the sulfide-based solid electrolyte according to the embodiment of the present invention or another sulfide-based solid electrolyte.

The positive electrode mixture may further include a conductive auxiliary agent. As the conductive auxiliary agent, a carbon material, a metal material, or a mixture thereof may be used. The conductive auxiliary agent may include at least one element selected from the group consisting of, for example, carbon, nickel, copper, aluminum, indium, silver, cobalt, magnesium, lithium, chromium, gold, ruthenium, platinum, beryllium, iridium, molybdenum, niobium, osmium, rhodium, tungsten, and zinc. The conductive auxiliary agent is preferably a highly conductive carbon element, a metal element, a mixture, or a compound containing carbon, nickel, copper, silver, cobalt, magnesium, lithium, ruthenium, gold, platinum, niobium, osmium, or rhodium. As the carbon material, for example, carbon black such as Ketjen Black, acetylene black, denka black, thermal black, and channel black, graphite, carbon fiber, activated carbon, and the like may be used.

The average thickness of the positive electrode layer of the all-solid-state lithium ion battery is not particularly limited and can be appropriately designed according to the purpose. The average thickness of the positive electrode layer of the all-solid-state lithium ion battery may be, for example, 1 µm to 100 µm, or 1 µm to 10 µm.

The method for forming the positive electrode layer of the all-solid-state lithium ion battery is not particularly limited and can be appropriately selected depending on the purpose. For example, the method for forming the positive electrode layer of the all-solid-state lithium ion battery includes a method of compression molding the positive electrode active material for the all-solid-state lithium ion battery.

The negative electrode layer of the lithium ion battery may be a layer of a known negative electrode active material for lithium ion batteries, or a layer of a negative electrode mixture obtained by mixing a known negative electrode active material for lithium ion batteries with the sulfide-based solid electrolyte according to the embodiment of the present invention or another sulfide-based solid electrolyte.

The negative electrode layer may contain a conductive auxiliary agent, similar to the positive electrode layer. The conductive auxiliary agent may be the same material as that described for the positive electrode layer. Examples of the negative electrode active material include carbon materials, specifically, artificial graphite, graphite carbon fiber, resin-sintered carbon, pyrolytic vapor-grown carbon, coke, mesocarbon microbeads (MCMB), furfuryl alcohol resin-sintered carbon, polyacene, pitch-based carbon fiber, vapor-grown carbon fiber, natural graphite, and non-graphitizable carbon, or mixtures thereof. Examples of the negative electrode material include metals such as lithium metal, indium metal, aluminum metal, and silicon metal, and alloys of the metals combined with other elements and compounds.

The average thickness of the negative electrode layer of the all-solid-state lithium ion battery is not particularly limited, and can be appropriately selected depending on the purpose. The average thickness of the negative electrode layer of the all-solid-state lithium ion battery may be, for example, 1 µm to 100 µm, or 1 µm to 10 µm.

The method for forming the negative electrode layer of the lithium ion battery is not particularly limited and can be appropriately selected depending on the purpose. Examples of the method for forming the negative electrode layer of the lithium ion battery include sputtering using a target material of the negative electrode active material, compression molding of the negative electrode active material, and vapor deposition of the negative electrode active material.

The average thickness of the solid electrolyte layer of the lithium ion battery formed by the sulfide-based solid electrolyte according to the embodiment of the present invention is not particularly limited and can be appropriately designed according to the purpose. The average thickness of the solid electrolyte layer of the lithium ion battery may be, for example, 50 µm to 500 µm, or 50 µm to 100 µm.

The method for forming the solid electrolyte layer of the lithium ion battery is not particularly limited and can be appropriately selected depending on the purpose. For example, the method for forming the solid electrolyte layer of the lithium ion battery includes sputtering using a target material of the solid electrolyte, or compression molding of the solid electrolyte.

Other members constituting the lithium ion battery are not particularly limited and can be appropriately selected depending on the purpose. Examples thereof include a positive electrode collector, a negative electrode collector, and a battery case.

The size and structure of the positive electrode current collector are not particularly limited and can be appropriately selected depending on the purpose.

Examples of the material for the positive electrode current collector include die steel, stainless steel, aluminum, aluminum alloy, titanium alloy, copper, gold, and nickel.

Examples of the shape of the positive electrode current collector include foil, plate, and mesh.

The average thickness of the positive electrode current collector may be, for example, 10 µm to 500 µm, or 50 µm to 100 µm.

The size and structure of the negative electrode current collector are not particularly limited and can be appropriately selected depending on the purpose.

Examples of the material of the negative electrode current collector include die steel, gold, indium, nickel, copper, and stainless steel.

Examples of the shape of the negative electrode current collector include foil, plate, and mesh.

The average thickness of the negative electrode current collector may be, for example, 10 µm to 500 µm, or 50 µm to 100 µm.

The battery case is not particularly limited and can be appropriately selected depending on the purpose, for example, known laminate films that can be used in conventional all-solid-state batteries. Examples of laminate films include resin laminate films and films in which metal is vapor-deposited on resin laminate films.

The shape of the battery is not particularly limited and can be appropriately selected depending on the purpose, for example, cylindrical, square, button, coin, and flat types.

### EXAMPLES

The following examples are provided to provide a better understanding of the present invention and its advantages, but the present invention is not limited to these examples.

### (Example 1)

In a glove box with an argon atmosphere, the raw materials were weighed so that the raw material composition was Li₄P_{0.9}Si_{0.1}S_{3.9}Cl_{0.1}I, and mixed in a mortar for 15 minutes to produce a mixed powder. Next, the mixed powder was made into 1g pellets, vacuum sealed in a quartz ampoule, and sintered at 500°C for 8 hours with the quartz ampoule to obtain a sulfide-based solid electrolyte having a composition of Li₄P_{0.9}Si_{0.1}S_{3.9}Cl_{0.1}I.

### (Example 2)

The same procedure as in Example 1 was carried out, except that the raw material composition was Li₄P_{0.8}Si_{0.2}S_{3.8}Cl_{0.2}I.

### (Example 3)

The same procedure as in Example 1 was carried out, except that the raw material composition was Li₄P_{0.7}Si_{0.3}S_{3.7}Cl_{0.3}I.

### (Example 4)

The same procedure as in Example 1 was carried out, except that the raw material composition was Li₄P_{0.8}Si_{0.2}S_{3.8}Br_{0.2}I.

### (Example 5)

The same procedure as in Example 1 was carried out, except that the raw material composition was Li₄P_{0.8}Si_{0.2}S_{3.8}I_{1.2}.

### (Example 6)

The same procedure as in Example 1 was carried out, except that the raw material composition was Li₄P_{0.8}Si_{0.2}S_{3.8}Cl_{0.1}Br_{0.1}I. As a result, a sulfide-based solid electrolyte having the composition Li₄P_{0.8}Si_{0.2}S_{3.8}Cl_{0.1}Br_{0.1}I was obtained.

### (Comparative Example 1)

The same procedure was carried out as in Example 1, except that the raw material charge composition was Li₄PS₄I.

### (Comparative Example 2)

The same procedure was carried out as in Example 1, except that the raw material charge composition was Li₄PS_{3.8}Cl_{0.2}I.

### (Comparative Example 3)

The same procedure was carried out as in Example 1, except that the raw material charge composition was Li₄PS_{3.8}Br_{0.2}I.

### (Comparative Example 4)

The same procedure was carried out as in Example 1, except that the raw material charge composition was Li₄P_{0.6}Si_{0.4}S_{3.6}Cl_{0.4}I.

### (Comparative Example 5)

The same procedure was carried out as in Example 1, except that the raw material charge composition was Li₄P_{0.95}Si_{0.05}S_{3.95}Cl_{0.05}I.

### <Composition analysis>

0.5 g of each sulfide-based solid electrolyte sample (powder) obtained in Examples 1 to 6 and Comparative Examples 1 to 5 was weighed out and dissolved in various acids, and then a composition analysis was performed using an inductively coupled plasma optical emission spectrometer (ICP-OES) "PS7800" manufactured by Hitachi High-Tech Corporation. The composition formulas of the sulfide-based solid electrolytes obtained by the composition analysis in Examples 1 to 6 and Comparative Examples 1 to 5 are shown in Table 1.

### <Ionic Conductivity>

0.2 g of each sulfide-based solid electrolyte powder obtained in Examples 1 to 6 and Comparative Examples 1 to 5 was pressed at a pressure of 370 MPa to form a plate, and then 0.1 g of gold powder was spread on each side and pressed at 555 MPa to produce a pellet with a gold electrode of 10 mm in diameter. Using the pellet, AC impedance measurements from 20 Hz to 100 MHz were performed at 30°C with an applied voltage of 100 mV using an E4990A manufactured by Toyo Corporation with open-short correction. The arcs seen in the part of the Cole-Cole plot obtained by the AC impedance measurement at frequencies of 10 kHz or more were analyzed to determine the Li ion migration resistance. Next, the ionic conductivity was calculated from the Li ion migration resistance and the thickness and area of the solid electrolyte part of the pellet used for the measurement based on the following formula. Ionic conductivity (mS/cm) = thickness of solid electrolyte part of pellet (cm) x 1000/[(Li ion migration resistance (Ω)) x (area of solid electrolyte part of pellet (cm2)]]

The test results are shown in Table 1.

**[Table 1]**

| | Formula | Ha | x | Ionic Conductivity 30°C[mS/cm] | Thickness of the solid electrolyte part of the pellet [cm] | Area of the solid electrolyte part of the pellet[cm²] | Li-ion migration resistance 30°C[Ω] |
|---|---|---|---|---|---|---|---|
| EX.1 | Li₄P₁₋ₓSiₓS₄₋ₓHaₓI | Cl | 0.1 | 0.77 | 0.114 | 0.82 | 181.7 |
| EX.2 | Li₄P₁₋ₓSiₓS₄₋ₓHaₓI | Cl | 0.2 | 1.22 | 0.112 | 0.82 | 112.1 |
| EX.3 | Li₄P₁₋ₓSiₓS₄₋ₓHaₓI | Cl | 0.3 | 0.88 | 0.114 | 0.82 | 157.9 |
| EX.4 | Li₄P₁₋ₓSiₓS₄₋ₓHaₓI | Br | 0.2 | 0.96 | 0.115 | 0.82 | 146.7 |
| EX.5 | Li₄P₁₋ₓSiₓS₄₋ₓHaₓI | I | 0.2 | 1.74 | 0.105 | 0.82 | 73.4 |
| EX.6 | Li₄P₁₋ₓSiₓS₄₋ₓHaₓI | Cl, Br | 0.2 | 0.94 | 0.108 | 0.82 | 140.8 |
| Comp.1 | Li₄PS₄I | - | - | 0.43 | 0.114 | 0.82 | 328.2 |
| Comp.2 | Li₄₋ₓPS₄₋ₓHaₓI | Cl | 0.2 | 0.30 | 0.108 | 0.82 | 439.4 |
| Comp.3 | Li₄₋ₓPS₄₋ₓHaₓI | Br | 0.2 | 0.33 | 0.157 | 0.82 | 584.5 |
| Comp.4 | Li₄P₁₋ₓSiₓS₄₋ₓHaₓI | Cl | 0.4 | 0.62 | 0.116 | 0.82 | 226.4 |
| Comp.5 | Li₄P₁₋ₓSiₓS₄₋ₓHaₓI | Cl | 0.05 | 0.53 | 0.113 | 0.82 | 261.8 |

### (Evaluation Results)

The sulfide-based solid electrolytes of Examples 1 to 6 all had a composition represented by the formula Li₄P₁₋ₓSiₓS₄₋ₓHaₓl (wherein Ha is one or both of Cl, Br and I, and 0.05<x≦0.3). As a result, the sulfide-based solid electrolytes of Examples 1 to 6 had ionic conductivity up to 10 times higher than that of a conventional sulfide-based solid electrolyte having a composition with Li₄PS₄l type structure. Therefore, all-solid-state lithium ion batteries using the sulfide-based solid electrolytes of Examples 1 to 6 are expected to have improved battery capacity.

In contrast, Comparative Examples 1 to 5 did not have the above composition, and had inferior ionic conductivity compared to Examples 1 to 6.

## Claims

1. A sulfide-based solid electrolyte represented by the formula Li₄P₁₋ₓSiₓS₄₋ₓHaₓI (wherein Ha is one or both of Cl, Br and I, and 0.05<x≦0.3).

2. A sulfide-based solid electrolyte according to claim 1, wherein 0.1≦x≦0.3 in the formula.

3. An all-solid-state lithium ion battery comprising a solid electrolyte layer containing the sulfide-based solid electrolyte according to claim 1 or 2, a positive electrode layer, and a negative electrode layer.
